Europäisches Patentamt

European Patent Office

Office européen des brevets

(19)

(11) Publication number:

**0 392 091**

**A1**

# EUROPEAN PATENT APPLICATION

(12)

(21) Application number: **89200908.5**

(22) Date of filing: **11.04.89**

(51) Int. Cl.5: **H04N 1/028**

(43) Date of publication of application:
**17.10.90 Bulletin 90/42**

(84) Designated Contracting States:
**AT BE CH DE ES FR GB GR IT LI LU NL SE**

(71) Applicant: **AGFA-GEVAERT naamloze vennootschap**
**Septestraat 27**
**B-2510 Mortsel(BE)**

(72) Inventor: **Pandelaers, Patrick Marie**
**Eugène Toussaintstraat 79 bus 14**
**B-1090-Brussel(BE)**

(54) Method and apparatus for image reproduction.

(57) An electro-optical document reading apparatus which comprises a lens (20) and a linear photosensitive CCD sensor (31), and wherein a light-intercepting rod (30) is provided between the lens and the sensor.

Fig. 1

EP 0 392 091 A1

## BACKGROUND OF THE INVENTION

### Field of the invention

The present invention relates to a method and device for compensating the shading effect of an optical reproduction system used for the imagewise reproduction of a document located in the subject plane of such system, into the image plane of such system. The term "imagewise" embraces in the present description the line-wise scanning of a document while it is moving relative to a slotlike opening in the subject plane of an optical reproduction system, as well as the integral reproduction of a document while the document is immobile.

In an optical reproduction system comprising lens means, a subject plane and an image plane, the amounts of light received at each point of the image plane should be equal for a uniformly lit subject plane. In practice this is not the case, since the light intensity declines with the distance from the optical axis of the lens and thus, e.g. in the case of an image scanner, individual pixels of an image sensor located farther away from the optical axis receive less light and accordingly deliver less output.

### Description of the prior art

There are two methods of achieving shading correction or for compensating this so-called "cosine-to-the-fourth" shading effect of an optical system.

In one method, an illumination source emits light of increasing intensity as the distance from the optical axis of a lens increases. As a result, an image sensor receives light at consistent levels along its length. This method is disclosed e.g. in US P 4,220,978. It is also known to provide an appropriately dimensioned light-shield between the lens and the document to be read, see GB A 2,064,809 and US P. 3,469,916. The proposed measures are difficult to dimension, and are critical to instal. Furthermore, the effect of the adjustment of the shield depends on the setting of the lens diaphragm.

In an other method, correction is made for each individual pixel of an image sensor, including the optical system as an integral part of the entire image scanning system. In other words, light reflected off a sheet of paper with a certain known reflectivity consistent all over its entire surface, is sensed by an image sensor. Signals representing light intensities are converted for individual pixels into exposure-correction data in a form suitable for storage in a shading-correction memory, e.g. a RAM (random access memory) circuit. When image data are received from the image sensor, the degree of amplification varies pixel by pixel based on the stored data so that all the pixels in the main scanning direction exhibit the same sensitivity. A disadvantage of this method is the significantly worse dynamic range for those pixels corrected with the highest amplification factors. It is therefore advisable to have only small variations in the amplification factors. This cannot be achieved if no further measures are taken to flatten the exposure distribution over the whole scanline width.

### SUMMARY OF THE INVENTION

#### Objects of the invention

It is an object of the present invention to provide an improved method and apparatus for compensating the shading effect of an optical reproduction system. It is a further object of the invention to provide a method and apparatus for compensating the shading effect by optical means to a large extent, but not completely, and to carry out the remaining compensation by the electronic processing of the electronic image signal obtained from such uncompletely compensated image-reproduction system, whereby a more uniform dynamic response range for all sensors involved, can be achieved.

#### Statement of the invention

According to the present invention, a method of compensating the shading effect of an optical reproduction system with a subject plane, an image plane, and lens system therebetween, comprises the use of light-intercepting means in the image beam between the subject plane and the image plane, characterized in that the light-intercepting means consists of at least one elongate member that is placed in a plane normal to the optical axis, the longitudinal axis of the member intersecting the optical axis of the reproduction system, and the thickness $t$ of the member and the axial distance $x$ of it from the lens center being a function of the desired extent of the correction of the shading effect in a direction normal to the length direction of the member.

The term "thickness" means the dimension of the elongate member measured in a plane normal to the optical axis, and in a direction normal to its longitudinal axis.

According to a suitable embodiment of the invention, the elongate member is placed between the lens system and the image plane, and the cross-section of the elongate member in a plane normal to the optical axis is a rectangle.

The method according to the invention is particularly suited for use in an electro-optical document reading apparatus of the type which comprises a CCD (charge coupled device) photosensitive sensor in the form of an elongate element which comprises a great number of discrete photosensitive elements arranged in line, a scanning system for linewise scanning a document to be read, and a lens for projecting the line images of the document onto the light-sensitive sensor which converts them into individual pixel signals which may be further processed in an electronic way. In the described apparatus, the longitudinal axis of the elongate member is normal to the longitudinal axis of the sensor.

The method according to the invention is also suited for use in the integral reproduction of a document as distinct from the scanning described hereinbefore. Such integral reproduction includes for instance the reproduction of a microfilm image in a microfilm reader and/or printer. In such apparatus, a second elongate light-intercepting member may be provided, the longitudinal axis of which is at 90° with respect to the corresponding axis of the first member in order to provide a two-dimensional correction of the lens shading.

A suitable form of a light-intercepting member is a rod with a uniform circular cross-section along its length.

According to a preferred embodiment of the invention, the shading effect of the lens is corrected up to at least 90 % by means of the inventive light-intercepting means, and the remaining at most 10 % of the shading effect is corrected by means of electronic circuitry means for varying the degree of amplification of the image signal of the sensor pixel by pixel based on stored data representing the remaining shading effect. A suitable method for carrying out the final correction pixel by pixel, is disclosed in EU A1 0 219 575 entitled : "Video output signal correction method and apparatus".

The present invention also embraces an electro-optical reading apparatus incorporating light-intercepting means constructed to operate in accordance with the method described hereinabove.

According to a suitable embodiment, such apparatus comprises lens means and a linear photosensitive CCD sensor, the sensor being mounted on a printed circuit board, and the printed circuit board being fitted to the lens mount. The lens mount may be in the form of a solid block of light metal, e.g. aluminium, which is provided with a bore for the lens system, and with opposed bores for the fitting of the ends of a light-intercepting rod in a direction normal to the optical axis of the arrangement.

BRIEF DESCRIPTION OF THE DRAWINGS

The invention will be described hereinafter by way of example with reference to the accompanying drawings, wherein:

Fig. 1 is a diagrammatic view of one embodiment of a scanner comprising a CCD photosensor,

Fig. 2 is a side view of the lens mount,

Fig. 3 is a section on line 3-3' of Fig. 2,

Fig. 4 is a longitudinal sectional view of the lens system and the printed circuit board,

Fig. 5 is a rear view of the arrangement of Fig.4,

Fig. 6 illustrates the light output of the scanner without shading correction, and

Fig. 7 illustrates the result of the same scanner provided with a light-intercepting rod in the lens mount.

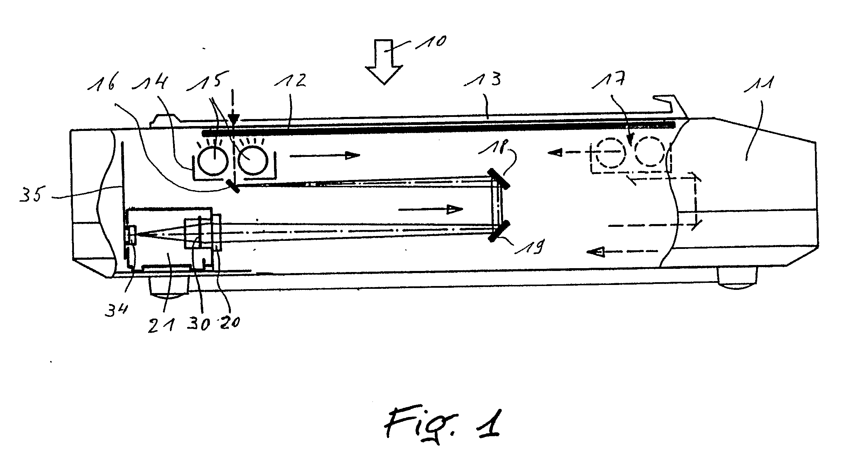

Referring to Fig. 1, there is illustrated diagrammatically a document scanner generally indicated by the numeral 10, which is mounted in a light-tight housing 11 which has an exposure glass plate 12, which determines a subject plane for a document to be scanned, and a flexible cover 13 for keeping the document in contact with the glass plate.

Inside the housing there is provided a carriage 14 with illuminating light tubes 15 and a first mirror 16. The carriage is laterally displaceable under the plate 12 for the scanning of the document, and its opposite extreme position is indicated at 17 in broken lines.

The scanner further comprises a set of two mirrors 18 and 19 that are displaced in parallel with the carriage 14 but at half the speed thereof so that the total length of the optical path from the document up to the lens 20 remains constant. Diaphragm means may be provided to adjust the intensity of the light which passes through the lens. The scanning arrangement as such is common in the art and needs therefore no further description.

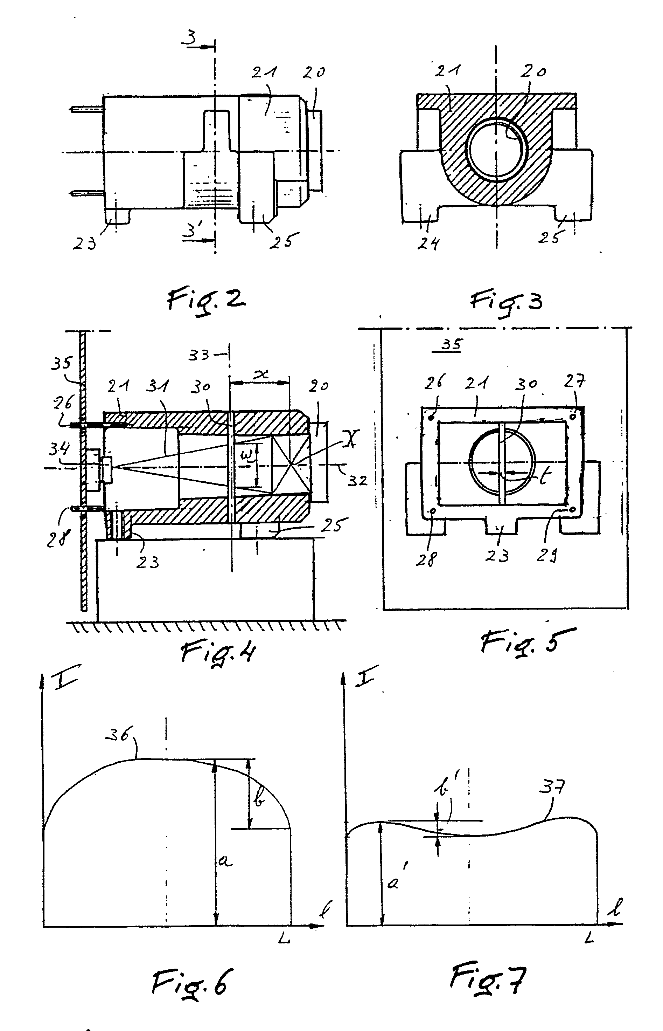

The lens 20 is mounted in a fixed position in a lens mount 21, see also Figs. 2 to 5, which in a suitable form may be a die-cast component from light metal, e.g. aluminium. The lens mount has three supporting feet 23, 24 and 25. The outlet end of the lens mount has a rectangular opening as may best be seen in Figs. 4 and 5, and may be provided with four studs 26 through 29 for the fixation of a printed circuit board 35 to the lens mount.

A light-intercepting means in the form of a rod 30 is provided as a separate component in the lens mount. In a suitable way, the rod is press-fitted in corresponding bores in the lens mount, but the position of the rod may also be fixed by means of a socket-head screw, by means of a screw-threaded endsection, etc. The rod may be made from steel wire or the like and may be black painted to reduce undesired reflections.

The thickness of the rod is indicated by t, and the distance between the rod axis and the optical centre X of the lens is illustrated by x. The dimension w is obtained by the intersection of the image beam 31 with a plane that comprises the optical axis 32 of the lens and the axis 33 of the rod 30.

The line-image of the scanned document is projected on a CCD photosensor 34 which is mounted in the image plane of the lens 20.

The sensor 34 is soldered on the printed circuit board 35. The distinct components mounted on the circuit board have not been illustrated in Figs. 4 and 5, but comprise as known in the art integrated circuits and separate electronic components, for the processing of the output signal of the CCD photo sensor. For the clearness of representation, the printed circuit board 34 has been illustrated as transparent in Fig. 5.

The diagram 36 of Fig. 6 gives an idea of a typical response curve that is obtained without shading correction. The diagram represents the measured output intensities I of the distinct elements of the photosensor 34 over the length L of the sensor.

The maximum deviation b of the signal amounted to approximately 50 % of the maximum amplitude a.

The diagram 37 of Fig. 7 illustrates the improved response curve that was obtained in accordance with the present invention by means of the rod 30.

The maximum deviation $b'$ amounted to 10 % of the maximum amplitude $a'$.

It should be understood that in practice the remaining 10 % deviation is corrected by a RAM circuit that stores exposure-correction data for each individual pixel, thereby to give a final uniformity as required.

The following data illustrate the described lens arrangement.

Lens 20 : a 4-element lens with a focal length of 60 mm, and a relative opening of 5.1/1.
Distance x : 20 mm
Width w of the image beam 40 at the position of the rod: 9 mm
Sensor 31 : a CCD photosensor comprising 3600 distinct photosensors over a length of 25 mm,

Rod 30 : total length 50 mm, diameter: 2.5 mm (i.e. width t).

The shape and the size of the light-intercepting means, and the distance x can be calculated in order to obtain an optimum result. Considering however that in the present application the aim is a considerable improvement of the shading effect of a lens system but not a complete correction thereof, the mentioned dimensions may also be determined on an empiric basis.

The present invention is not limited to the described embodiment.

The light-intercepting member may have other shapes than a rod.

The light-intercepting member may have a non-symmetric cross section and may be arranged for rotation about its longitudinal axis, so that rotation about such axis enables a control on the amount of light-interception.

The fixing of the board 35 to the lens mount may also occur by means that enable the adjustment of the position of the sensor 34 relative to the lens.

There may be provided a second light-intercepting member at an angle of 90° with respect to the first member, in those cases wherein it is desired to obtain a two-dimensional correction of the lens shading.

## Claims

1. A method of compensating the shading effect of an optical reproduction system with a subject plane, an image plane, and lens means therebetween, which comprises the use of light-intercepting means in the image beam between the subject plane and the image plane,
characterized in that the light-intercepting means consists of at least one elongate member (30) that is placed in a plane normal to the optical axis (32), the longitudinal axis (33) of the member intersecting the optical axis of the reproduction system, and the thickness t of the member and the axial distance x of it from the optical centre X of the lens (20) being a function of the desired extent of the correction of the shading effect in a direction normal to the length direction of the member.

2. A method according to claim 1, wherein the light-intercepting means (30) is placed between the lens means and the image plane.

3. A method according to claim 1 or 2, wherein the cross-section of said light-intercepting means (30) in a plane normal to the optical axis is a rectangle.

4. A method according to claim 1,2 or 3, wherein said light-intercepting means has the form of a rod with a uniform circular cross-section along its length.

5. A method according to any of claims 1 to 4 hereinbefore, wherein a second elongate light intercepting member is provided, the longitudinal axis of which is at 90° with respect to the corresponding axis of the first member.

6. A method according to any of claims 1 to 4, wherein there is placed a linear, photosensitive CCD sensor (34) in the image plane, the longitudinal axis of the sensor being normal to the longitudial axis of the elongate member.

7. A method according to claim 6, comprising correcting the shading effect of the lens means of the device up to at least 90 % by the light-intercepting means, and correcting the remaining less than 10 % of the shading effect by electronic circuitry means for varying the degree of amplification of the image signal of the sensor pixel by pixel based on stored data representing the remaining shading effect.

8. An electro-optical document reading apparatus incorporating light-intercepting means constructed to operate in accordance to a method according to any preceding claim.

9. An electro-optical document reading apparatus according to claim 8, which comprises lens means (20) and a linear photosensitive CCD sensor (34), wherein the sensor is mounted on a printed circuit board (35), in which the lens means (20) is mounted in a lens mount (21), and wherein the printed circuit board is supported by the lens mount.

Fig. 1

Fig.2

Fig.3

Fig.4

Fig.5

Fig.6

Fig.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | DE-A-3 040 569 (CANON K.K.)<br>* Page 9, lines 29-36; figure 10 * | 1,2,6,9 | H 04 N 1/028 |
| A | US-A-4 248 517 (NISHIKAWA)<br>* Column 5, lines 3-60; figure 4 * | 1,3 | |
| D,A | EP-A-0 219 575 (AGFA-GEVAERT)<br>* Whole document * | 7 | |

TECHNICAL FIELDS SEARCHED (Int. Cl.5)

H 04 N 1/00
G 02 B 27/00

The present search report has been drawn up for all claims

| Place of search | Date of completion of the search | Examiner |
|---|---|---|
| THE HAGUE | 12-12-1989 | HAZEL J.F. |

EPO FORM 1503 03.82 (P0401)